# EUROPEAN PATENT APPLICATION

(11) **EP 4 019 175 A1**
(43) Date of publication of application: **29.06.2022**
(21) Application number: 21213607.1
(22) Date of filing: 10.12.2021
(51) Int. Cl.: B23B 31/26, B23B 39/16, B23Q 3/12, B23Q 3/157, B23Q 39/02, B23Q 39/00

(54) **MACHINE TOOL WITH AN AUTOMATIC SYSTEM FOR REPLACING TOOLS AND RELATED METHOD**

(30) Priority: 23.12.2020 IT 202000032081
(71) Applicant: SCM Group S.p.A., 47921 Rimini (RN) (IT)
(72) Inventor: FERRI, Mirko, 47921 Rimini (IT); CECCARELLI, Paolo, 47921 Rimini (IT); BERTUCCIOLI, Alessandro, 47921 Rimini (IT)
(74) Representative: Tiburzi, Andrea

(57) **Abstract**

The present invention relates to a machine tool for machining workpieces, comprising: at least one operative head (1) comprising a plurality of spindles (2) rotatable about respective rotation axes which are parallel to one another and each provided with respective first coupling means (4) being configured to provide, in use, a removable coupling with a respective tool (3) for performing at least one machining operation on a workpiece; a supporting device (6, 6') where a plurality of seats (7, 8') is formed to removably house, in use, a plurality of tools (3); and a control unit for controlling the movement of said at least one operative head (1) and/or said supporting device (6, 6') in such a way that when a spindle (2) of said plurality of spindles (2) is in contact with a tool (3) of said plurality of tools (3) which is placed in a seat (7, 8') of said supporting device (6, 6'), a removable mutual coupling between said spindle (2) and said tool (3) is achieved by said respective first coupling means (4).

## Description

The present invention relates to a machine tool with an automatic system for replacing tools.

More specifically, the invention relates to a machine tool for machining workpieces comprising at least one operative head, equipped with at least one rotating spindle, and a system for allowing the automatic execution of the assembly and disassembly operations of the tools in said spindle.

The invention proposed here also relates to a method for the automatic execution of tool changes.

In the following, the description will be addressed to a drilling machine, but it is clear that it should not be considered limited to this specific use, as it can also be extended to machine tools of different types, that is, suitable for carrying out operations other than boring.

To date, when the need arises to replace a tool mounted on the spindle of a machine tool with another tool due to operational needs, the operations for disassembling the tool in use and subsequent assembly of the new tool are normally carried out by an operator assigned to this task.

This unavoidably involves rather a long downtime to allow the manual replacement of tools in the spindles, as well as the use of a human resource for this specific purpose.

In addition to this, it must also be considered that the tool assembly operations may not be performed perfectly, just because they are carried out manually and not through an automatic system.

In light of the above, it is therefore an object of the present invention to provide a machine tool that allows the replacement of tools in the relative spindles in an automatic way.

Another object of the invention is to provide a machine tool that is such as to allow the replacement of the tools in the respective spindles in a quick and safe way, thus obtaining a significant reduction in the downtime normally required to allow the manual replacement of tools.

A further object of the present invention is to provide a machine tool equipped with an automatic tool replacement system that is simple and effective.

It is, therefore, specific object of the present invention a machine tool for machining workpieces, comprising: at least one operative head comprising a plurality of spindles rotatable about respective rotation axes which are parallel to one another and each provided with respective first coupling means being configured to provide, in use, a removable coupling with a respective tool for performing at least one machining operation on a workpiece; a supporting device where a plurality of seats is formed to removably house, in use, a plurality of tools; and a control unit for controlling the movement of said at least one operative head and/or said supporting device in such a way that when a spindle of said plurality of spindles is in contact with a tool of said plurality of tools which is placed in a seat of said supporting device, a removable mutual coupling between said spindle and said tool is achieved by said respective first coupling means.

Preferably according to the invention, said respective first coupling means are configured to provide, in use, a removable coupling with a respective tool by a mutual rotation of said spindle and said tool.

Preferably according to the invention, said control unit is able to command the movement of said at least one operative head and/or said supporting device in such a way as to simultaneously put a plurality of spindles into mutual contact with a plurality of tools.

Advantageously according to the invention, said respective first coupling means may comprise a respective first thread.

Further according to the invention, said respective first coupling means may comprise a respective seat, where said respective first thread is formed.

Conveniently according to the invention, said machine may comprise at least one tool which is provided with second coupling means being configured to be removably coupled with said first coupling means of said at least one spindle.

Still according to the invention, said second coupling means may comprise a second thread.

Preferably according to the invention, the seats of said plurality of seats comprise holding means to prevent at least one tool placed in a seat from rotating relative to said seat when mutually coupling said first coupling means of a spindle and said at least one tool by a mutual rotation between said spindle and said at least one tool.

Further according to the invention, said holding means may comprise friction means for providing, in use, a determined level of friction with said at least one tool.

Still according to the invention, said holding means may comprise form-coupling means for providing, in use, a form coupling with at least one part of said at least one tool.

Conveniently according to the invention, at least one seat of said supporting device may be rotatable about a respective rotation axis, and in that said machine tool comprises at least one clutch device, which is automatic, connected with said at least one seat being rotatable, and configured such that said at least one seat keeps stationary during the mutual coupling between a spindle and a tool placed in said at least one seat by rotating said spindle, and rotates about the respective rotation axis after the conclusion of mutual coupling between said spindle and said tool.

Further according to the invention, said at least one clutch device may be comprised in said supporting device.

Advantageously according to the invention, at least one seat of said supporting device may be rotatable about a respective rotation axis, and in that said machine tool comprises actuating means for rotating said at least one seat about said rotation axis.

Still according to the invention, said machine may comprise a further supporting device where a plurality of seats is formed to removably house, in use, a plurality of tools.

It is, also, object of the present invention a method for coupling a tool to a spindle of an operative head of a machine tool according to any one of preceding claims, wherein a plurality of tools is placed in a plurality of seats of said supporting device, said method comprising the steps of: moving said operative head and/or said supporting device in such a way as to put in mutual contact said plurality of spindles and said plurality of tools placed in said plurality of seats; and providing, by said first coupling means, a mutual removable coupling between said plurality of spindles and said plurality of tools.

Preferably according to the invention, said mutual removable coupling between said plurality of spindles and said plurality of tools is executed simultaneously.

Advantageously according to the invention, said mutual removable coupling between said plurality of spindles and said plurality of tools may be executed by a mutual rotation, according to a first rotation way, between each spindle and each tool placed in a seat.

Further according to the invention, said method comprises the steps of: moving said operative head and/or said supporting device in such a way that a tool being mounted to a spindle is placed in a predetermined seat of said supporting device; and executing a mutual rotation, according to a second rotation way opposite with respect to said first rotation way, between said spindle and said predetermined seat such that said tool is decoupled from said spindle.

Still according to the invention, said method may comprise the steps of: placing a plurality of tools mounted to a plurality of spindles in a plurality of seats of said supporting device; and coupling, to said plurality of spindles, a plurality of tools placed in a plurality of seats of said further supporting device.

The present invention will be now described, for illustrative but not limitative purposes, according to its preferred embodiments, with particular reference to the figures of the enclosed drawings, wherein:

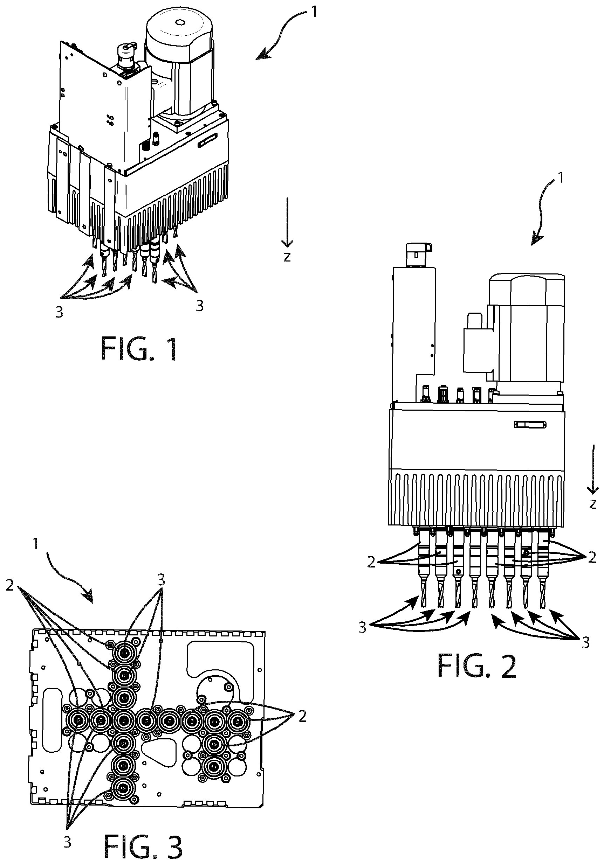

figure 1 is an axonometric view of an operative head of a machine tool according to the present invention;
figure 2 is a side view of the operative head shown in figure 1;
figure 3 is a bottom plan view of the operative head of figures 1 and 2;
figure 4 is an axonometric view of a further component of a machine tool according to the present invention, in a first operating step of such machine tool;
figure 5 is an axonometric view of the component shown in figure 4 associated with a plurality of tools for drilling, in a second operating step of the machine tool;
figure 6 is a partial sectional view of a spindle of the operative head illustrated in figures 1-3, associated with a drilling tool;
figure 7 is a sectional view taken from figure 5;
figure 8 shows the operative head of figures 1-3 and the component illustrated in figures 4-5, in a first operating step;
figure 9 shows the operative head of figures 1-3 and the component illustrated in figures 4-5, in a second operating step;
figure 10 is a detail view of the detail A indicated in figure 9;
figure 11 shows the operative head of figures 1-3 and the component illustrated in figures 4-5, in a third operating step;
figure 12 is a detail view of detail B indicated in figure 11;
figure 13 shows the operative head of figures 1-3 and the component illustrated in figures 4-5, in a fourth operating step;
figure 14 is an isometric view of a variant of the component shown in figure 4;
figure 15 is a top view of what is shown in figure 14;
figure 16 is an axonometric view of the component illustrated in figures 14 and 15 associated with a plurality of tools for drilling;
figure 17 is a top view of what is shown in figure 16; and
figure 18 is a sectional view taken from figure 17.

In the various figures, similar parts will be indicated by the same reference numbers.

With reference to the attached figures, 1 indicates a mobile operative head of a drilling machine (not shown) according to the present invention.

Said operative head 1 has, at the bottom, a plurality of spindles 2 rotatable about respective rotation axes, parallel to each other.

In the operative head 1 there is also a vertical movement system to move, independently, each spindle 2 along the respective rotation axis, namely along a vertical Z-axis.

On the spindles 2 are mounted, in a removable way, the tools necessary for the execution of the planned machining.

In the present case, illustrated in the figures attached hereto, these tools are drill bits 3.

At the free end of each spindle 2 there is a respective threaded seat 4 directed axially to the spindle 2 itself and configured to receive, in use, a corresponding threaded connection portion 5 of a drill bit 3.

Each drill bit 3 can therefore be disassembled from the corresponding spindle 2 by unscrewing the relative threaded connection portion 5 from the threaded seat 4 of the spindle 2 itself.

The aforementioned boring machine according to the present invention also comprises a support 6 for housing the drill bit 3.

This support 6 can be fixed, or anchored to the frame or to another fixed part of the boring machine, or mobile or mounted on a member or mobile device of the drilling machine itself.

A plurality of through cavities 7 is formed in the support 6 to allow, each, the housing of a drill bit 3.

In particular, in each through cavity 7 there is provided a flared abutment portion 8 with a circular development, configured to realize precisely, an abutment with the threaded connection portion 5 of a drill bit 3.

Therefore, when a drill bit 3 is housed in a through cavity 7 of the support 6, said drill bit 3 completely passes through the through cavity 7 remaining hanging on the support 6, or supported by this, due to the abutment made by the threaded connection portion 5 of the drill bit 3 on the flared portion 8.

Furthermore, each flared portion 8 is covered with a layer of friction material 9, whose function will be better detailed later in this description.

The aforementioned machine tool also comprises a control unit (not shown) for controlling the displacements of the operative head 1 and/or of the support 6.

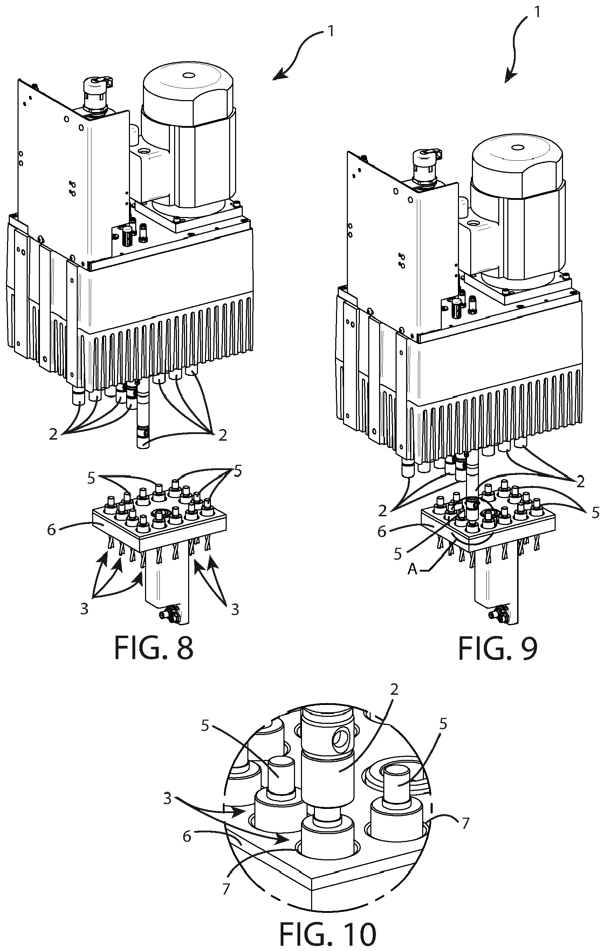

In case of, for operational requirements, it is necessary to mount a drill bit 3 on a spindle 2 of the operative head 1, it is positioned above the support 6 carrying at least one drill bit 3 arranged in a respective through cavity 7, so that said spindle 2 is vertically aligned with the drill bit 3 (see fig. 8).

Subsequently, the lowering of the spindle 2, and possibly also that of the entire operative head 1, is arranged towards the underlying drill bit 3 (see figures 9 and 10).

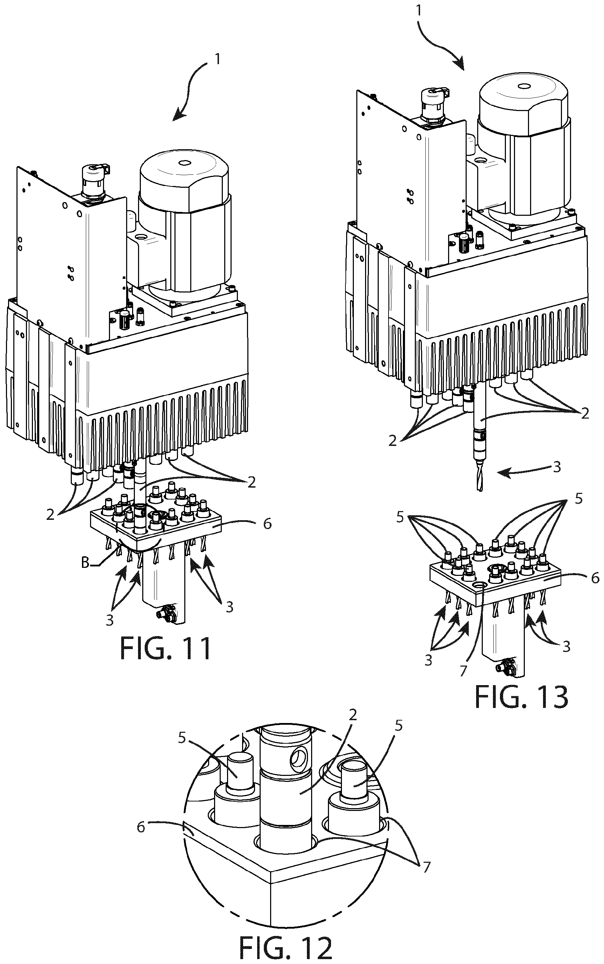

During this lowering step, when the spindle 2, rotating around its own rotation axis, comes into contact with the threaded connection portion 5 of the drill bit 3, the progressive screwing of the same threaded connection portion 5 into the threaded seat 4 occurs of the spindle 2, thus obtaining the coupling of the drill bit 3 to the spindle 2 (see figures 11 and 12).

The screwing of the threaded connection portion 5 of the drill bit 3 into the threaded seat 4 of the spindle 2 is made possible by the layer of friction material 9 provided in the contact area between the drill bit 3 and the support 6.

The friction produced by the layer of friction material 9 generates, in fact, a resistance to the rotation, such as to keep the aforesaid drill bit 3 stationary until the screwing of the relative threaded connection portion 5 into the threaded seat 4 of the spindle 2 is completed; then allowing, once said screwing has been completed, the boring tip 3 itself to rotate together with the spindle 2.

This, therefore, avoids the need to keep under control the screwing step of the threaded connection portion 5 of the boring tip 3 into the threaded seat 4 of the spindle 2, since the immediate interruption of the rotation of the spindle 2 is not required at the moment of the conclusion of this tightening step.

Once the threaded connection portion 5 of the boring tip 3 has been screwed into the threaded seat 4 of the spindle 2, the operative head 1 is raised along the aforementioned vertical Z-axis to extract the same drill bit 3 from the respective through cavity 7 of the support 6 (see figure 13).

If disassembling this drill bit 3 from the relative spindle 2 is then necessary, in order to replace it or to interrupt the operating activity of the drilling machine, it is proceed by positioning the operative head 1 above the support 6 to obtain the vertical alignment between the spindle 2 having the drill tip 3, and a through cavity 7 of the support 6, and then controlling the lowering of the operative head 1 and/or of the spindle 1 along the vertical Z-axis up to arrange the drill tip 3 in this through cavity 7.

At this point, to obtain the decoupling of the drill tip 3 from the spindle 2, the rotation of the latter is arranged in the opposite direction to that necessary to achieve screwing.

Similarly to what has been indicated above, the unscrewing of the threaded connection portion 5 of the boring tip 3 from the threaded seat 4 of the spindle 2 is made possible due to the resistance to the rotation determined by the layer of friction material 9, which allows keeping the drill bit 3, while the rotation of the spindle 2 is arranged to achieve the aforementioned unscrewing.

Finally, once the threaded connection portion 5 of the drill bit 3 has been unscrewed from the threaded seat 4 of the spindle 2, the operative head 1 is raised along the vertical Z-axis, leaving the drill bit 3 in the through cavity 7 of the support 6.

Both the screwing and unscrewing operations described above could be performed simultaneously on two or more drill bits 3, as well as on a single drill bit 3 as indicated above; this allows increasing the advantages produced by the drilling machine according to the present invention, in terms of machine downtime reduction for the replacement of tools in the operative head.

The aforesaid machine tool can also comprise two or more supports 6, positioned for example in a dedicated area of this machine (for example a magazine equipped with housings for such supports 6) or adjacent to it; in this case, the method according to the present invention can provide a first step, in which the operative head 1 drops off, according to the methods described above, the drill bits 3 mounted on the relative spindles 2 in an empty support 6 (i.e., with the relative through cavities 7 free), and a subsequent second step, in which the same operative head 1 moves towards a further support 6 carrying a plurality of drill bits 3 in the respective through cavities 7, to simultaneously pick-up said drill bits 3 through a single pick up operation.

The machine tool according to this last constructive configuration has a particular flexibility of use and allows carrying out its tooling in a very short time.

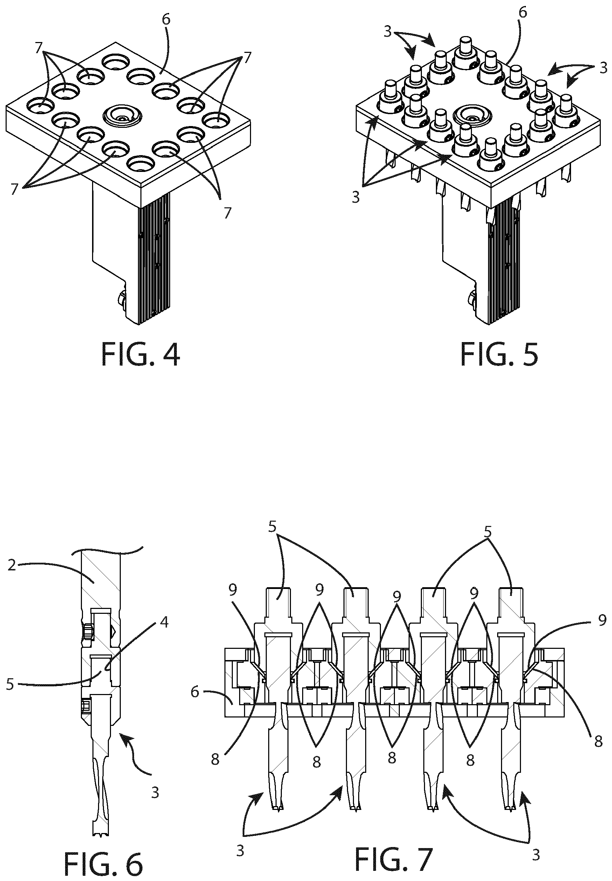

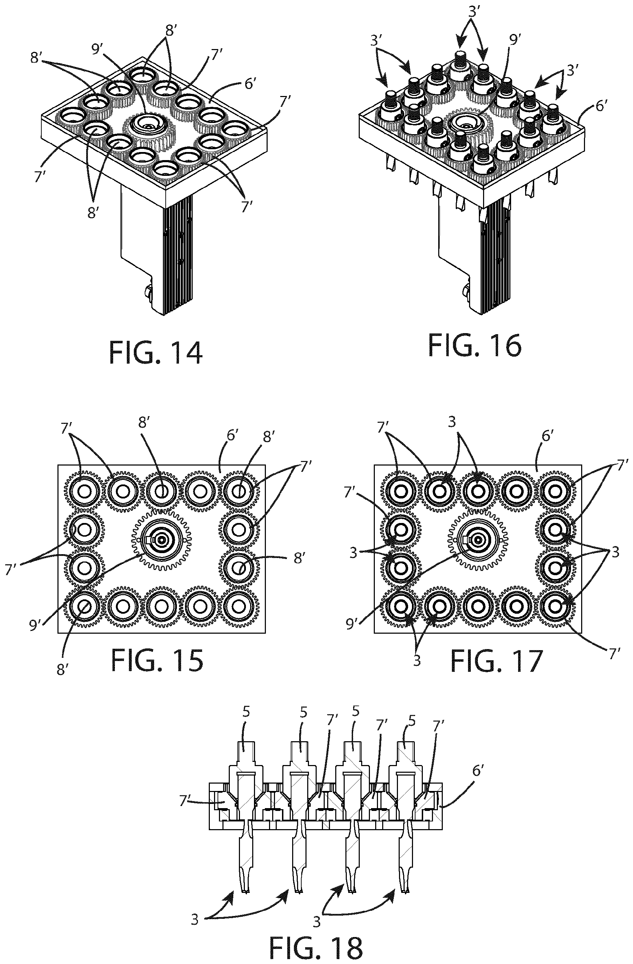

With reference to a variant of the present invention, shown in figures 14-18, 6' indicates a second support for housing the drill bits 3.

Said second support 6' comprises a plurality of rotatable driven gears 7', each around its own vertical rotation axis, in each of which a respective through cavity 8' is formed.

The aforesaid driven gears 7' are meshed in series with each other and arranged in such a way as to form a closed path.

In addition, in the second support 6 'there is a driving toothed wheel 9' meshed with a gear 7 'of the aforementioned plurality of driven gears 7'.

The machine tool proposed here also comprises actuation means capable of placing said driving toothed wheel 9 'in rotation around the relative axis of vertical rotation, thus allowing the transmission of the rotary motion from the driving toothed wheel 9' to the driven gears 7'.

This particular technical expedient allows achieving the screwing of the threaded connection portion 5 of the boring tip 3 into the threaded seat 4 of the spindle 2 by rotating the boring tip 3, instead of the spindle 2, by means of the aforementioned driven gears 7'.

The aforesaid actuation means could be internal or external to said second support 6' and could comprise, for example, an electric motor or a compressed air system.

In accordance with a further embodiment of the present invention, not illustrated in the attached figures, in place of the aforementioned layer of friction material 9, it is possible to provide the through cavities 7 of such a shape as to achieve a shape coupling with the drill bits 3, in such a way that the latter remain stationary during the screwing and unscrewing operations performed by the rotation of the spindles 2. In this case, it is desirable that the through cavities 7 are formed in respective support elements, which are also part of the support 6, rotatable around a respective vertical rotation axis and connected to an automatic friction device, configured in such a way as to keep these support elements stationary during the screwing and unscrewing operations of the drilling bits 3 and to allow the rotation of the same support elements once these operations have been completed, or as soon as the spindle detects a certain resistance to the rotation by the supporting elements.

The aforementioned automatic friction device can be provided in the support 6, or in the operative head 1, or in another part of the machine tool.

According to further embodiments not shown in the figures, in the spindles 2 of the operative head 1, and also in the threaded connection portion 5 of the drill bits 3, connection means can be provided to achieve a reciprocal connection between the spindles 2 and the drill bits 3 by means of a movement other than a rotation, such as for example a translational movement; in the latter case, snap connection means could be used, for example.

As highlighted above, the present invention is not intended to be limited to the use of drill bits 3, other types of tools may also be provided.

It follows that the proposed invention relates, in a broad sense, to machine tools, and therefore not only to drilling machines.

As can be seen from the above description, the machine according to the present invention allows providing for the replacement of tools in the operative head in an automatic, fast, and safe way, with the direct consequence of reducing machine downtime to a minimum for changing the tools.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine tool for machining workpieces, comprising:
- at least one operative head (1) comprising a plurality of spindles (2) rotatable about respective rotation axes which are parallel to one another and each provided with respective first coupling means (4) being configured to provide, in use, a removable coupling with a respective tool (3) for performing at least one machining operation on a workpiece;
- a supporting device (6, 6') where a plurality of seats (7, 8') is formed to removably house, in use, a plurality of tools (3); and
- a control unit for controlling the movement of said at least one operative head (1) and/or said supporting device (6, 6') in such a way that when a spindle (2) of said plurality of spindles (2) is in contact with a tool (3) of said plurality of tools (3) which is placed in a seat (7, 8') of said supporting device (6, 6'), a removable mutual coupling between said spindle (2) and said tool (3) is achieved by said respective first coupling means (4).

2. Machine tool according to claim 1, **characterised in that** said respective first coupling means (4) are configured to provide, in use, a removable coupling with a respective tool (3) by a mutual rotation of said spindle (2) and said tool (3).

3. Machine tool according to claim 1 or 2, **characterised in that** said control unit is able to command the movement of said at least one operative head (1) and/or said supporting device (6, 6') in such a way as to simultaneously put a plurality of spindles (2) into mutual contact with a plurality of tools (3).

4. Machine tool according to claim 2, **characterized in that** said respective first coupling means (4) comprise a respective first thread.

5. Machine tool according to claim 4, **characterized in that** said respective first coupling means comprise a respective seat (4) where said respective first thread is formed.

6. Machine tool according to any one of preceding claims, **characterized in that** it comprises at least one tool (3) which is provided with second coupling means (5) being configured to be removably coupled with said first coupling means (4) of said at least one spindle (2).

7. Machine tool according to claim 6, **characterized in that** said second coupling means (5) comprises a second thread.

8. Machine tool according to any one of preceding claims, **characterized in that** the seats (7, 8') of said plurality of seats (7, 8') comprise holding means (9) to prevent at least one tool (3) placed in a seat (7, 8') from rotating relative to said seat (7, 8') when mutually coupling said first coupling means (4) of a spindle (2) and said at least one tool (3) by a mutual rotation between said spindle (2) and said at least one tool (3).

9. Machine tool according to claim 8, **characterized in that** said holding means comprise friction means (9) for providing, in use, a determined level of friction with said at least one tool (3).

10. Machine tool according to claim 8 or 9, **characterized in that** said holding means comprise form-coupling means for providing, in use, a form coupling with at least one part of said at least one tool (3).

11. Machine tool according to claim 10, **characterized in that** at least one seat (8') of said supporting device (6') is rotatable about a respective rotation axis, and **in that** said machine tool comprises at least one clutch device, which is automatic, connected with said at least one seat (8') being rotatable, and configured such that said at least one seat (8') keeps stationary during the mutual coupling between a spindle (2) and a tool (3) placed in said at least one seat (8') by rotating said spindle (2), and rotates about the respective rotation axis after the conclusion of mutual coupling between said spindle (2) and said tool (3).

12. Machine tool according to claim 11, **characterized in that** said at least one clutch device is comprised in said supporting device (6').

13. Machine tool according to any one of preceding claims, **characterized in that** at least one seat (8') of said supporting device (6') is rotatable about a respective rotation axis, and **in that** said machine tool comprises actuating means for rotating said at least one seat (8') about said rotation axis.

14. Machine tool according to any one of preceding claims, **characterized in that** it comprises a further supporting device (6, 6') where a plurality of seats (7, 8') is formed to removably house, in use, a plurality of tools (3).

15. Method for coupling a tool (3) to a spindle (2) of an operative head (1) of a machine tool according to any one of preceding claims, wherein a plurality of tools (3) is placed in a plurality of seats (7, 8') of said supporting device (6, 6'), said method comprising the steps of:
- moving said operative head (1) and/or said supporting device (6, 6') in such a way as to put in mutual contact said plurality of spindles (2) and said plurality of tools (3) placed in said plurality of seats (7, 8'); and
- providing, by said first coupling means (4), a mutual removable coupling between said plurality of spindles (2) and said plurality of tools (3).

16. Method according to claim 15, **characterized in that** said mutual removable coupling between said plurality of spindles (2) and said plurality of tools (3) is executed simultaneously.

17. Method according to claim 15 or 16, **characterized in that** said mutual removable coupling between said plurality of spindles (2) and said plurality of tools (3) is executed by a mutual rotation, according to a first rotation way, between each spindle (2) and each tool (3) placed in a seat (7, 8').

18. Method according to claim 17, **characterized in that** it comprises the steps of:
- moving said operative head (1) and/or said supporting device (6, 6') in such a way that a tool (3) being mounted to a spindle (2) is placed in a predetermined seat (7, 8') of said supporting device (6, 6'); and
- executing a mutual rotation, according to a second rotation way opposite with respect to said first rotation way, between said spindle (2) and said predetermined seat (7, 8') such that said tool (3) is decoupled from said spindle (2).

19. Method according to any one of claims 15 to 18, said method being performable to couple a tool (3) to a spindle (2) of an operative head (1) of a machine tool according to claim 14, **characterized in that** it comprises the steps of:
- placing a plurality of tools (3) mounted to a plurality of spindles (2) in a plurality of seats (7, 8') of said supporting device (6, 6'); and
- coupling, to said plurality of spindles (2), a plurality of tools (3) placed in a plurality of seats (7, 8') of said further supporting device (6, 6').
